# NEUE EUROPÄISCHE PATENTSCHRIFT

(11) **EP 1 343 982 B2**
(45) Veröffentlichungstag und Bekanntmachung des Hinweises auf die Entscheidung über den Einspruch: **27.01.2010**
(45) Hinweis auf die Patenterteilung: 16.06.2004
(21) Anmeldenummer: 01984873.8
(22) Anmeldetag: 19.12.2001
(51) Int. Cl.: F16H 1/28

(54) **PLANETENGETRIEBE**
PLANETARY GEAR
BOITE PLANETAIRE

(30) Priorität: 22.12.2000 DE 10064815
(43) Veröffentlichungstag der Anmeldung: 17.09.2003
(60) Teilanmeldung: 04006318.2
(73) Patentinhaber: ZF Friedrichshafen AG, 88038 Friedrichshafen (DE)
(72) Erfinder: SCHULZ, Horst, 88045 Friedrichshafen (DE); KIRSCHNER, Tino, 88097 Eriskirch (DE)
(86) Internationale Anmeldenummer: PCT/EP2001/015076
(87) Internationale Veröffentlichungsnummer: WO 2002/052169

(56) Entgegenhaltungen:
- EP-A- 0 687 836
- DE-A- 19 612 144
- DE-A- 19 956 789
- US-A- 1 619 051
- US-A- 4 091 688
- ' Einreihige zusammengepasste Kegelrollenlager' SKF-HAUPTKATALOG Nr. 4000/4, 1994 - 1994, Seite 586
- DUBBEL: 'Taschenbuch für den Maschinenbau', Bd. 16, 1987, SPRINGER-VERLAG Seiten G60 - G61

## Beschreibung

Die Erfindung betrifft ein Planetengetriebe, wie es z.B. aus der US 1619 051 bekannt ist.

Derartige Planetengetriebe, bei denen der Planetenträger den Abtrieb bildet und gemeinsam mit einer abtriebsseitigen Abtriebswelle durch ein axial angestelltes Schräglagerpaar gelagert ist, sind dafür geeignet, an der Abtriebswelle hohe Kräfte und Kippmomente zu übertragen. Derartige Getriebe werden in Kombination mit einem angebauten Elektromotor unter anderem in der Automatisierungstechnik verwendet, wobei auf der Abtriebswelle beispielsweise ein Zahnritzel oder eine Riemenscheibe für Zahnriemen angeordnet ist. Mit der Lagerung der Abtriebswelle und des Planetenträgers durch ein axial angestelltes Schräglagerpaar ist durch eine entsprechende Vorspannung zwischen den Lagern eine sehr hohe Steifigkeit und Präzision der Lagerung erzielbar.

Bei der Lagerung durch ein axial angestelltes Schräglagerpaar wird grundsätzlich zwischen der sogenannten X-Anordnung und der sogenannten O-Anordnung der beiden angestellten Lager unterschieden. Bei der X-Anordnung bilden die Drucklinien, die durch die Wälzkörper verlaufen und sich in der Rotationsachse schneiden, Druckkegel, deren Spitzen einander zugewandt sind. Bei der O-Anordnung sind die Spitzen der Druckkegel der beiden Lager des Lagerpaars voneinander abgewandt.

Die X-Anordnung bietet fast immer beste Voraussetzungen für eine einfache Montage, geringen Bauaufwand und übersichtliche Konstruktionen, da beide Lager des Schräglagerpaars jeweils mit ihrem Innenring und ihrem Außenring so montiert werden können, dass axiale Anschlagflächen an den Bauteilen, die beim Lagereinpressen als Anschläge dienen, später im Betrieb auch die axialen Betriebsbelastungen aufnehmen können und so in der Regel keine weiteren Axialsicherungsbauteile für die Lagerinnen- und -außenringe vorgesehen und montiert werden müssen. Allerdings ist bei der X-Anordnung die lagerkinematisch wirksame Lagerdistanz, also der Abstand der Spitzen der Druckkegel, kürzer als die Axialdistanz der beiden Lager. Grundsätzlich ist jedoch eine möglichst große lagerkinematisch wirksame Lagerdistanz erwünscht, um eine hohe Belastbarkeit und Steifigkeit sowie einen präzisen Lauf der Abtriebswelle zu erzielen. Ein Getriebe, bei dem der Planetenträger bzw. die Abtriebswelle durch ein Lagerpaar in X-Anordnung gelagert ist, ist beispielsweise in der nicht vorveröffentlichten
DE 199 56 789 A1 gezeigt. Aufgrund der oben angesprochenen Eigenschaften der X-Anordnung sind bei diesem Getriebe die beiden angestellten Lager beiderseits der Planetenräderebene bzw. beiderseits des Planetenradsatzes angeordnet, wodurch eine insgesamt kurze axiale Baulänge des Getriebes möglich ist.

Demgegenüber bietet die O-Anordnung eine günstigere lagerkinematisch wirksame Lagerdistanz, die größer ist als die konstruktive Axialdistanz der beiden Lager, wodurch Vorteile für die Belastbarkeit und Steifigkeit sowie hinsichtlich eines präzisen Laufs der Antriebswelle erzielbar sind. Die Lager beiderseits der Planetenräderebene in O-Anordnung einzubauen, ist jedoch sehr problematisch, da hier beim Einpressen der Lager der Richtungssinn der Einpreßbewegung stets entgegengesetzt liegt zum axialen Richtungssinn der späteren Lagerbetriebsbelastung. Es sind also spielfreie Axialsicherungsbauteile für die Lagerinnenund -außenringe notwendig, die schwierig unterzubringen sind und den'Bauraumanspruch vergrößern. Eine exakte Einstellung des Lagerspiels bzw. der Lagervorspannung bei der Montage ist sehr aufwendig und problembehaftet.

Die EP 0 687 836 A1 zeigt ein Planetengetriebe, bei dem die Abtriebswelle durch ein Lagerpaar in O-Anordnung gelagert ist. Bei diesem Getriebe sind beide Lager des Lagerpaars nebeneinander und axial abtriebsseitig vom eigentlichen Planetengetriebe angeordnet. Die Innenringe der beiden Lager sitzen benachbart auf einem Wellenabschnitt der Abtriebswelle und sind durch eine Gewindemutter vorgespannt, während axiale Anschlagflächen an abgesetzten Gehäusebohrungen die Schultern der Außenringe abstützen. Nachteilig ist hier der insgesamt höhere axiale Bauraumanspruch des Getriebes, da im Raum abtriebsseitig neben dem Planetensatz beide Lager des Lagerpaars untergebracht werden müssen, während im Bereich der Eingangswelle vorhandener Bauraum ungenutzt bleibt. Aufgrund des geringen axialen Abstands der beiden Lager ist die lagerkinematisch wirksame Lagerdistanz trotz O-Anordnung gering.

Der Erfindung liegt daher die Aufgabe zugrunde, ein Planetengetriebe anzugeben, bei dem die Lager eines axial angestellten Schräglagerpaars derart angeordnet sind, dass eine einfache Montage, ein geringer Bauaufwand und eine insgesamt übersichtliche Konstruktion erzielt wird, vergleichbar mit einem Getriebe, bei dem die Lager in X-Anordnung eingebaut sind, wobei gleichzeitig eine höhere Belastbarkeit und Steifigkeit sowie ein präziserer Lauf als bei der X-Anordnung erzielt werden soll.

Diese Aufgabe wird durch ein Planetengetriebe gemäß Anspruch 1 gelöst.

Vorteilhafte Ausgestaltungen der Erfindung sind durch die Unteransprüche gegeben.

Bei dem erfindungsgemäßen Planetengetriebe ist der Planetenträger mit der Abtriebswelle in der gleichen vorteilhaften Weise montierbar, wie bei einem Getriebe mit X-Anordnung, wobei allerdings die lagerkinematisch wirksame Axialdistanz wesentlich größer ist.

In einer vorteilhaften Ausgestaltung der Erfindung ist das erste Schräglager auf einer Seite einer durch die Planetenräder verlaufenden, axialen Planetenräderebene und das zweite Schräglager auf der anderen Seite der Planetenräderebene angeordnet. Diese Ausgestaltung bietet eine sehr große lagerkinematisch wirksame Axialdistanz bei einer kurzen Baulänge.

Sollen von der Abtriebswelle sehr hohe Kippmomente aufgenommen werden können, können beide Lager so angeordnet werden, dass die Innenringe in dem Gehäuse festgelegt sind und die Außenringe mit dem Planetenträger umlaufen, wobei die Spitzen beider Druckkegel voneinander abgewandt sind. Damit werden die gleichen lagerkinematischen Eigenschaften wie bei einer O-Anordnung erzielt.

Oftmals ist es jedoch auch schon ausreichend, wenn nur das erste Schräglager mit seinem Innenring in dem Gehäuse festgelegt ist und das zweite Schräglager mit seinem Innenring in dem Planetenträger umläuft und mit seinem Außenring in dem Gehäuse festgelegt ist, wobei das zweite Schräglager mit seinen Drucklinien einen Druckkegel bildet, dessen Spitze dem ersten Schräglager zugewandt ist. Hierdurch ergibt sich eine Parallelanordnung der Druckkegel, so dass - bei Verwendung von gleichen Lagern - die lagerkinematisch wirksame Axialdistanz gleich der tatsächlichen Axialdistanz der Lager ist.

Bei einer Ausführungsform dieser Ausgestaltung sind die Spitzen der Druckkegel der beiden Schräglager von der Abtriebsseite des Getriebes abgewandt, wodurch eine einfacher Aufbau erzielt wird. Bei der alternativen Ausführungsform sind die Spitzen der Druckkegel der beiden Schräglager zu der Abtriebsseite des Getriebes hingewandt, so dass die Lagerbasis in vorteilhafter Weise zur Abtriebswelle hin verschoben ist.

Da der Planetenträger innerhalb des Gehäuses umläuft, ist es notwendig, Mittel vorzusehen, die es ermöglichen, dass der Außenring dem Planetenträger zugeordnet werden kann und der Innenring dem Gehäuse. In vorteilhafter Weise kann dies dadurch geschehen, dass der Planetenträger zur Aufnahme des Außenrings des Schräglagers eine rohrförmige Verlängerung aufweist und/oder dass das Gehäuse zur Aufnahme des Innenrings dieses Schräglagers einen zylindrischen Vorsprung aufweist, der von einer ringförmigen Ausnehmung im Gehäuse umgeben ist, die dieses Schräglager und wenigstens teilweise die rohrförmige Verlängerung des Planetenträgers aufnimmt.

Anhand der beigefügten Zeichnungen werden die Erfindung und weitere vorteilhafte Details näher erläutert. Dabei zeigen:
- Fig. 1:: eine erste Ausführungsform eines erfindungsgemäßen Getriebes und
- Fig. 2:: eine zweite Ausführungsform eines erfindungsgemäßen Getriebes.

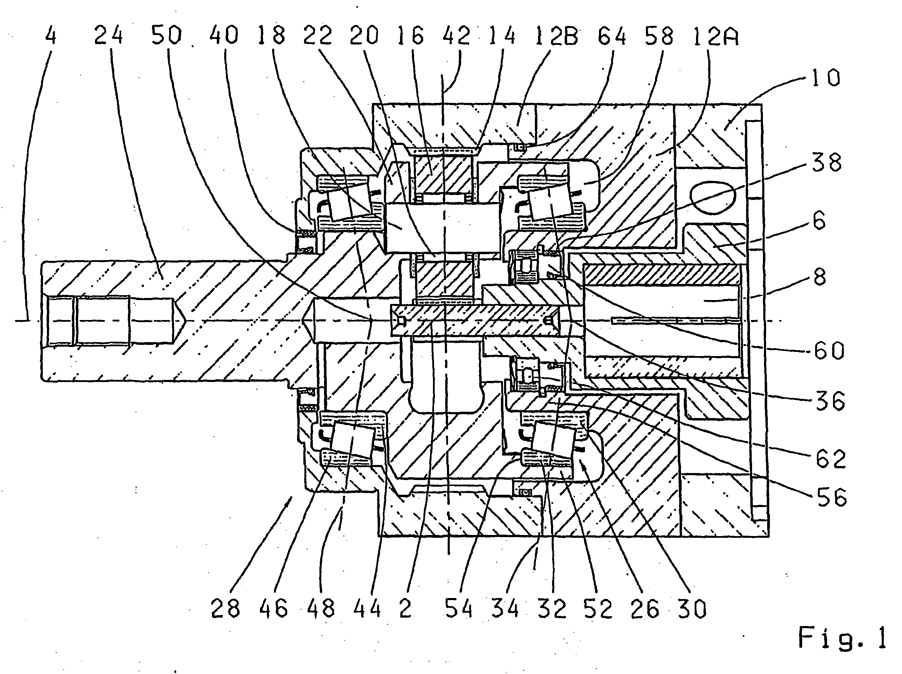

In der Fig. 1 ist mit 2 ein zu einer Getriebehauptachse 4 koaxiales Sonnenrad bezeichnet. Das Sonnenrad 2 ist drehfest mit einer Sonnenradwelle 6 verbunden, die einen Aufnahmebereich 8 für eine nicht dargestellte Motorwelle eines an den Motorflansch 10 anflanschbaren, nicht dargestellten Elektromotors aufweist. Das Gehäuse des Planetengetriebes ist aus zwei Gehäuseteilen 12A, 12B zusammengesetzt. Im Gehäuseteil 12B ist ein Hohlrad 14 eingearbeitet. Mehrere Planetenräder 16, von denen nur eines dargestellt ist, sind auf Planetenbolzen 18 mit Planetenlagern 20 drehbar gelagert. Die Planetenbolzen 18 bzw. die Planetenräder 16 sind am Umfang eines Planetenträgers 22 verteilt angeordnet und in gleichzeitigem Zahneingriff mit dem Sonnenrad 2 und dem Hohlrad 14. Der Planetenträger 22 bildet den Abtrieb und ist einstückig mit der Abtriebswelle 24 ausgebildet. Der Planetenträger 22 bzw. die Abtriebswelle 24 sind durch ein axial angestelltes Schräglagerpaar, gebildet aus einem ersten Schräglager 26 und einem zweiten Schräglager 28, innerhalb des Gehäuses gelagert. In der dargestellten Ausführungsform sind Kegelrollenlager verwendet, die besonders tragfähig sind. Die angestellte Lagerung könnte jedoch auch mit Schrägkugellagern oder sogar gegeneinander angestellten Rillenkugellagern ausgeführt werden. Ebenso ist es möglich, eine Kombination von Kegelrollen-, Schrägkugel- oder Rillenkugellagern zu verwenden. Wesentlich ist, dass die beiden Lager des Lagerpaars gegeneinander axial angestellt werden können.

Zur Abdichtung des Getriebeinnenraums sind auf der Antriebswelle 6 und auf der Abtriebswelle 24 Radialwellendichtringe 38, 40 vorgesehen.

Erfindungsgemäß ist das erste Schräglager 26 mit seinem Innenring 30 in dem Gehäuse 12A festgelegt und läuft mit seinem Außenring 32 mit dem Planetenträger 22 um. Um eine möglichst große lagerkinematisch wirksame Distanz zu erzielen, ist das Schräglager 26 derart eingebaut, dass es mit seinen Drucklinien 34 einen Druckkegel bildet, dessen Spitze 36 von dem zweiten Schräglager 28 abgewandt ist.

Eine große Axialdistanz der Lager wird auch dadurch erzielt, dass das erste Schräglager 26 auf der in der Fig. 1 rechten Seite der durch die Planetenräder 16 verlaufenden axialen Planetenräderebene 42 und das zweite Schräglager 28 auf der anderen Seite der Plänetenräderebene 42 angeordnet ist. In der Fig. 1 ist das zweite Schräglager 28 in derselben Weise eingebaut, wie bei einem Getriebe mit X-Anordnung. Dabei läuft der Innenring 44 des zweiten Schräglagers mit dem Planetenträger 22 und der Abtriebswelle 24 um, während der Außenring 46 im Gehäuse 12B festgelegt ist. Die Drucklinien 48 dieses Lagers bilden einen Druckkegel, dessen Spitze dem ersten Schräglager 26 zugewandt ist.

Die dargestellte Lageranordnung entspricht also weder einer X- noch einer O-Anordnung, sondern einer Kombination aus X- und O-Anordnung. Obgleich die durch die Drucklinien 34, 48 gebildeten Druckkegel gleich ausgerichtet sind, sind die beiden Lager 28, 26 gegeneinander angestellt und vorspannbar.

Die Spitzen 36, 50 der beiden Druckkegel sind von der durch die Abtriebswelle 24 repräsentierten Abtriebsseite des Getriebes abgewandt. Der Planetenträger 22 weist zur Aufnahme des Außenrings 32 des ersten Schräglagers 26 eine rohrförmige Verlängerung 52 auf, die mit einem Absatz 54 versehen ist. Das Gehäuseteil 12A weist zur Aufnahme des Innenrings 30 des ersten Schräglagers 26 einen zylindrischen Vorsprung 56 auf. Dieser ist von einer ringförmigen Ausnehmung 58 im Gehäuseteil 12A umgeben, die das erste Schräglager 26 und wenigstens teilweise die rohrförmige Verlängerung 52 des Planetenträgers 22 aufnimmt.

Der zylindrische Vorsprung 56 im Gehäuseteil 12A weist eine zur Getriebehauptachse 4 koaxiale Bohrung 60 auf, die ein Kugellager 62 für die hindurchgeführte Antriebswelle 6 aufnimmt.

Zur leichteren Montage ist das Gehäuse aus zwei Gehäuseteilen 12A, 12B zusammengesetzt, wobei das erste Schräglager 26 in dem ersten Gehäuseteil 12A und das zweite Schräglager 28 in dem zweiten Gehäuseteil 12B sitzt. Zur Abdichtung zwischen den Gehäuseteilen 12A, 12B ist eine Dichtung 64 vorgesehen.

Die Montageabfolge ist dieselbe wie bei einem Getriebe mit X-Anordnung. Zunächst wird der Innenring 30 des ersten Schräglagers 26 auf den axialen Vorsprung 56 bis zum Anschlag aufgeschoben. Als nächstes wird der Planetenträger, in den bereits der Außenring 32 ebenfalls bis zum Anschlag 54 eingepreßt ist, in Position gebracht. Der Planetenträger ist bereits mit dem Innenring 44 des zweiten Schräglagers versehen, der ebenfalls bis zum Anschlag auf den Lagersitz aufgepreßt ist. In einem letzten Montageschritt wird das Gehäuseteil 12B mit dem darin eingebrachten Außenring 46 des zweiten Schräglagers in Position gebracht und durch nicht dargestellte Schrauben mit dem Gehäuseteil 12A verschraubt. Die Vorspannung der angestellten Schräglager 26, 28 kann hierbei auf einfache Weise durch entsprechende Distanzelemente, die an axialen Stirnflächen der Lagerinnen- bzw. -außenringe oder zwischen den beiden Gehäuseteilen 12A, 12B eingebaut werden, eingestellt werden.

In der dargestellten Ausführungsform sind die beiden Kegelrollenlager 26, 28 Gleichteile. Es können jedoch ohne weiteres auch voneinander abweichende Baugrößen oder Bauformen von Schräglagern entsprechend verwendet werden.

In Kombination mit einem Elektromotor, der das Sonnenrad 2 direkt oder über eine vorgeschaltete Getriebestufe antreibt und der an das Getriebegehäuse angeflanscht ist, ergibt sich eine kurzbauende Antriebseinheit für hohe Belastungen der Abtriebswelle 24, die einfach montierbar ist.

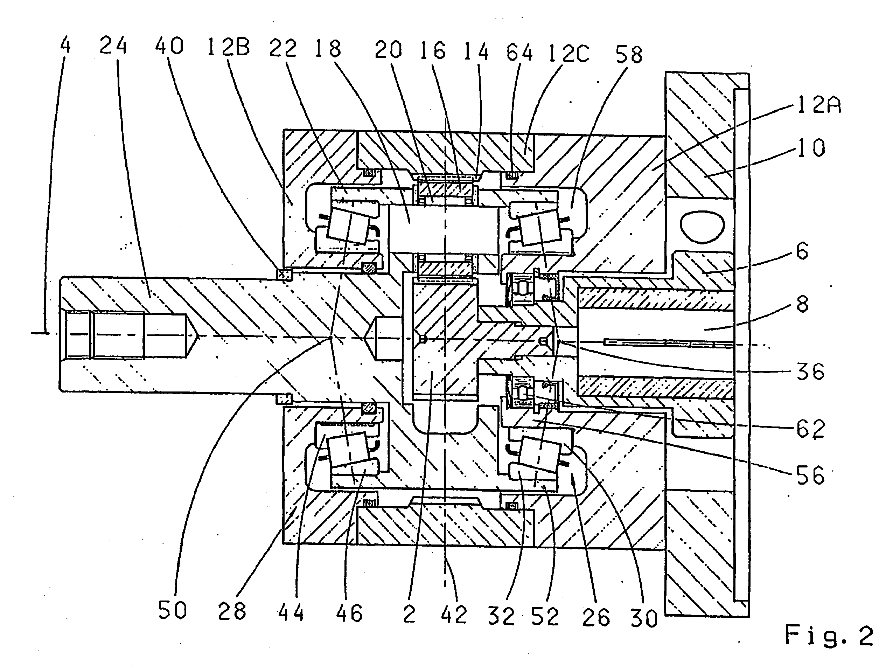

Die Fig. 2, in der gleiche Positionen mit gleichen Bezugsziffern wie in Fig. 1 versehen sind, zeigt eine Ausführungsform der Erfindung, bei der auch das zweite Schräglager (28) mit seinem Innenring (44) in dem Gehäuse (12B) festgelegt ist und mit seinem Außenring (46) mit dem Planetenträger (22) umläuft und mit seinen Drucklinien einen Druckkegel bildet, dessen Spitze (50) von dem ersten Schräglager (26) abgewandt ist. Die beiden Schräglager sind zur Erzielung einer maximalen lagerkinematisch wirksamen Lagerdistanz in O-Anordnung angeordnet, wobei die Montage und die Einstellung der Vorspannung so einfach erfolgen kann wie bei einem herkömmlichen Getriebe mit X-Anordnung der Lager. Das Gehäuse ist dreiteilig aufgebaut. Zwischen den Gehäuseteilen 12A und 12B, die die beiden Schräglager 26, 28 aufnehmen ist ein drittes Gehäuseteil 12C angeordnet, in welches das Hohlrad 14 eingearbeitet ist.

### Bezugszeichen

- 2: Sonnenrad
- 4: Getriebehauptachse
- 6: Antriebswelle
- 8: Aufnahme
- 10: Flansch
- 12A: Gehäuseteil
- 12B: Gehäuseteil
- 12C: Gehäuseteil
- 14: Hohlrad
- 16: Planetenrad
- 18: Planetenbolzen
- 20: Planetenlager
- 22: Planetenträger
- 24: Abtriebswelle
- 26: Schräglager
- 28: Schräglager
- 30: Innenring
- 32: Außenring
- 34: Drucklinie
- 36: Spitze
- 38: Radialwellendichtring
- 40: Radialwellendichtring
- 42: Planetenräderebene
- 44: Innenring
- 46: Außenring
- 50: Spitze
- 52: Verlängerung
- 54: Absatz
- 56: Vorsprung
- 58: Ausnehmung
- 60: Bohrung
- 62: Kugellager
- 64: Dichtung

## Patentansprüche

1. Planetengetriebe mit einer Abtriebswelle (24) mit einem zu einer Getriebehauptachse (4) koaxialen, drehantreibbar gelagerten Sonnenrad (2), mit einem in einem Gehäuse (12B) festgelegten Hohlrad (14) und mit einem im Gehäuse (12A, 128) drehbar gelagerten Planetenträger 22, an dessen Umfang verteilt mehrere Planetenräder (16) drehbar gelagert sind, die in gleichzeitigem Zahneingriff mit dem Sonnenrad (2) und dem Hohlrad (14) stehen, wobei der Planetenträger (22) den Abtrieb bildet und gemeinsam mit der abtriebsseitigen Abtriebswelle (24) innerhalb des Gehäuses (12A, 12B) durch ein axial angestelltes Schräglagerpaar, gebildet aus einem ersten Schräglager (26) und einem zweiten Schräglager (28), gelagert ist, wobei der Planetenträger (22) einstückig mit der Abtriebswelle ausgebildet ist und wobei mindestens das erste Schräglager (26) mit seinem Innenring (30) in dem Gehäuse (12A) festgelegt ist und mit seinem Außenring (32) mit dem Planetenträger (22) umläuft und mit seinen Drucklinien (34) einen Druckkegel bildet, dessen Spitze (36) von dem zweiten Schräglager (28) abgewandt ist.

2. Planetengetriebe nach Anspruch 1, **dadurch gekennzeichnet, dass** das erste Schräglager (26) auf einer Seite einer durch die Planetenräder (16) verlaufenden, axialen Planetenräderebene (42) und das zweite Schräglager (28) auf der anderen Seite der Planetenräderebene (42) angeordnet ist.

3. Planetengetriebe nach Anspruch 1 oder 2, **dadurch gekennzeichnet, dass** das zweite Schräglager (28) mit seinem Innenring (44) in dem Gehäuse (12B) festgelegt ist und mit seinem Außenring (46) mit dem Planetenträger (22) umläuft und mit seinen Drucklinien einen Druckkegel bildet, dessen Spitze (50) von dem ersten Schräglager (26) abgewandt ist.

4. Planetengetriebe nach Anspruch 1 oder 2, **dadurch gekennzeichnet, dass** das zweite Schräglager (28) mit seinem Innenring (44) mit dem Planetenträger (22) umläuft und mit seinem Außenring (46) in dem Gehäuse (12B) festgelegt ist und mit seinen Drucklinien (48) einen Druckkegel bildet, dessen Spitze '(50) dem ersten Schräglager (26) zugewandt ist.

5. Planetengetriebe nach Anspruch 4, **dadurch gekennzeichnet, dass** die Spitzen (36, 50) der Druckkegel der beiden Schräglager (26, 28) von der Abtriebsseite des Getriebes abgewandt sind.

6. Planetengetriebe nach Anspruch 4, **dadurch gekennzeichnet, dass** die Spitzen (36, 50) der Druckkegel der beiden Schräglager (26, 28) zu der Abtriebsseite des Getriebes hingewandt sind.

7. Planetengetriebe nach einem der vorhergehenden Ansprüche, **dadurch gekennzeichnet, dass** der Planetenträger (22) zur Aufnahme des Außenrings (32) eines Schräglagers (26) eine rohrförmige Verlängerung (52) aufweist.

8. Planetengetriebe nach Anspruch 7, **dadurch gekennzeichnet, dass** das Gehäuse (12A) zur Aufnahme des Innenrings (30) eines Schräglagers (26) einen zylindrischen Vorsprung (56) aufweist, der von einer ringförmigen Ausnehmung (58) im Gehäuse (12A) umgeben ist, die dieses Schräglager (26) und wenigstens teilweise die rohrförmige Verlängerung (52) des Planetenträgers (22) aufnimmt.

9. Planetengetriebe nach Anspruch 8, **dadurch gekennzeichnet, dass** der zylindrische Vorsprung (56) eine zur Getriebehauptachse (4) koaxiale Bohrung (60) aufweist, die ein Lager (62) für eine durchgeführte Antriebswelle (6) aufnimmt.

10. Planetengetriebe nach einem der vorhergehenden Ansprüche, **dadurch gekennzeichnet, dass** das Gehäuse aus mindestens zwei Gehäuseteilen (12A, 12B) zusammengesetzt ist, wobei das erste Schräglager (26) in einem ersten Gehäuseteil (12A) und das zweite Schräglager (28) in einem zweiten Gehäuseteil (12B) sitzt.

11. Planetengetriebe nach einem der vorhergehenden Ansprüche, **dadurch gekennzeichnet, dass** das erste und das zweite Schräglager (26, 28) Gleichteile sind.

12. Antriebseinheit mit einem Planetengetriebe nach einem der vorhergehenden Ansprüche, wobei das Sonnenrad (2) direkt oder über eine vorgeschaltete Getriebestufe von einem Elektromotor antreibbar ist und wobei der Elektromotor an das Getriebegehäuse (12A) angeflanscht ist.

## Claims

1. Planetary gear with an output shaft (24) with a sun gear (2) in coaxial position relative to a main transmission axis (4) and mounted in a manner permitting rotary drive; with a ring gear (14) fixed in a housing (128) and with a planetary carrier 22 which is bearing-supported inside the housing (12A, 128) on whose periphery several bearing-supported planetary gears (16) simultaneously mesh with the sun gear (2) and the ring gear (14), with the planetary carrier (22) forming the output and mounted together with an output-end output shaft (24) within the housing (12A, 128) by means of an axially inclined angular bearing pair composed of a first angular bearing (26) and a second angular bearing (28); here, the planetary carrier (22) is a one-piece design with the output shaft, with at least the first angular bearing (26) being fixed with its inner ring (30) inside the housing (12A) and rotating with its outer ring (32) with the planet carrier (22), and, by means of its pressure lines (34) creates a pressure cone whose peak (36) is turned away from the second angular bearing (28).

2. Planetary gear according to claim 1 or 2, **characterized in that** the first angular bearing (26) is arranged on one side of an axial planetary gear plane (42) while the second angular bearing (28) is arranged on the other side of the planetary gear plane (42).

3. Planetary gear according to claim 1 or 2, **characterized in that** the second angular bearing (28) is fixed in the housing (12B) with its inner ring (44) while its outer ring (46) rotates with the planetary carrier (22) and with its pressure lines forms a pressure cone whose peak (50) faces away from the first angular bearing (26).

4. Planetary gear according to claim 1 or 2, **characterized in that** the second angular bearing (28) rotates with its inner ring (44) with the planetary carrier (22) while it is fixed in the housing (12B) with its outer ring (46) and with its pressure lines (48) forms a pressure cone whose peak (50) faces the first angular bearing (26).

5. Planetary gear according to claim 4, **characterized in that** the peaks (36, 50) of the pressure cones of the two angular bearings (26, 28) face away from the output end of the transmission.

6. Planetary gear according to claim 4, **characterized in that** the peaks (36, 50) of the pressure cones of the two angular bearings (26, 28) face the output end of the transmission.

7. Planetary gear according to one of the preceding claims, **characterized in that** the planetary carrier (22) for accommodating the outer ring (32) of an angular bearing (26) features a tube-shaped extension (52).

8. Planetary gear according to claim 7, **characterized in that** the housing (12A) for accommodating the inner ring (30) of an angular bearing (26) features a cylindrical projection (56), which is surrounded by a ring-shaped recess (58) in the housing (12A), which accommodates this angular bearing (26) and at least part of the tube-shaped extension (52) of the planetary carrier (22).

9. Planetary gear according to claim 8, **characterized in that** the cylindrical projection (56) features a coaxial bore (60) relative to the transmission main axis (4) which accommodates a bearing (62) for a feedthrough drive shaft (6).

10. Planetary gear according to one of the preceding claims, **characterized in that** the housing is composed of at least two housing parts (12A, 12B), with the first angular bearing (26) being accommodated in a first housing part (12A) and the second angular bearing (28) being accommodated in a second housing part (12B).

11. Planetary gear according to one of the preceding claims, **characterized in that** the first and the second angular bearing (26, 28) are identical parts.

12. Drive unit with a planetary gear according to one of the preceding claims, with the center gear (2) being drivable directly by an electric motor or via a preceding transmission stage and with the electric motor being flanged to the transmission housing (12A).

## Revendications

1. Transmission planétaire dotée d'un arbre de sortie (24), d'un planétaire (2) logé de façon à pouvoir être entraîné en rotation et coaxial par rapport à un axe principal de la transmission (4), d'une couronne (14) fixée dans un carter (128) et d'un arbre porte-satellites (22) logé en rotation dans le carter (12A, 128), à la périphérie duquel sont logés en rotation plusieurs satellites (16), qui sont à la fois en engrènement avec le planétaire (2) et la couronne (14), sachant que l'arbre porte-satellites (22) constitue la sortie et est logé, avec l'arbre de sortie côté sortie (24) à l'intérieur du carter (12A, 128), grâce à un train d'engrenages à denture hélicoïdale positionné axialement, celui-ci étant constitué d'un premier palier radial à butée (26) et d'un deuxième palier radial à butée (28), et sachant que l'arbre porte-satellites (22) constitue une seule pièce avec l'arbre de sortie et sachant qu'au moins le premier palier radial à butée (26) est fixé, avec sa bague intérieure (30), dans le carter (12A), et tourne avec sa bague extérieure (32) avec l'arbre porte-satellites (22) et constitue avec ses lignes de pression (34) un cône de pression, dont la pointe (36) est orientée vers le côté opposé au deuxième palier radial à butée (28).

2. Transmission épicycloïdale selon la revendication 1, **caractérisée en ce que** le premier palier radial (26) est situé sur un côté d'un plan axial des pignons satellites (42) passant par les pignons satellites (16) et **en ce que** le deuxième palier radial (28) est situé sur un autre côté du plan des pignons satellites (42).

3. Transmission épicycloïdale selon la revendication 1 ou 2, **caractérisée en ce que** le deuxième palier radial (28) est fixé dans le carter (12B) avec sa bague interne (44) et tourne, avec sa bague externe (46), avec le porte-satellites (22), et constitue, avec ses lignes de pression, un cône de pression dont la pointe (50) est orientée du côté opposé au premier palier radial (26).

4. Transmission épicycloïdale selon la revendication 1 ou 2, **caractérisée en ce que** le deuxième palier radial (28) tourne, avec sa bague interne (44), avec le porte-satellites (22) et est fixé, avec sa bague externe (46), dans le carter (12B), et constitue, avec ses lignes de pression, un cône de pression dont la pointe (50) est orientée du côté du premier palier radial (26).

5. Transmission épicycloïdale selon la revendication 4, **caractérisée en ce que** les pointes (36, 50) des cônes de pression des deux paliers radiaux (26, 28) sont orientées du côté opposé à la sortie de la transmission.

6. Transmission épicycloïdale selon la revendication 4, **caractérisée en ce que** les pointes (36, 50) des cônes de pression des deux paliers radiaux (26, 28) sont orientées du côté de la sortie de la transmission.

7. Transmission épicycloïdale selon l'une des revendications précédentes, **caractérisée en ce que** le porte-satellites (22) comporte un prolongement tubulaire (52) pour le logement de la bague externe (32) d'un palier radial (26).

8. Transmission épicycloïdale selon la revendication 7, **caractérisée en ce que** le carter (12A) comporte, pour le logement de la bague interne (30) d'un palier radial (26), une saillie cylindrique (56) entourée d'un évidement annulaire (58) dans le carter (12A) qui loge ce palier radial (26) et au moins partiellement le prolongement tubulaire (52) du porte-satettites (22).

9. Transmission épicycloïdale selon la revendication 8, **caractérisée en ce que** la saillie cylindrique (56) comporte un alésage (60), coaxial à l'axe principal de la transmission (4), qui loge un palier (62) d'un arbre d'entrée traversant (6).

10. Transmission épicycloïdale selon l'une des revendications précédentes, **caractérisée en ce que** le carter est constitué d'au moins deux parties de carter (12A, 12B), le premier palier radial (26) se trouvant dans une première partie de carter (12A) et le deuxième palier radial (28) se trouvant dans une deuxième partie de carter (12B).

11. Transmission épicycloïdale selon l'une des revendications précédentes, **caractérisée en ce que** le premier et le deuxième palier radiaux (26, 28) sont des pièces identiques.

12. Unité d'entraînement avec une transmission épicycloïdale selon l'une des revendications précédentes, dans laquelle la roue planétaire (2) peut être entraînée directement ou à l'aide d'un étage de transmission intermédiaire et dans laquelle le moteur électrique est bridé sur le carter de la transmission (12A).
